# EUROPÄISCHE PATENTSCHRIFT

(11) **EP 0 592 704 B1**
(45) Veröffentlichungstag und Bekanntmachung des Hinweises auf die Patenterteilung: **03.06.1998**
(21) Anmeldenummer: 92117418.1
(22) Anmeldetag: 12.10.1992
(51) Int. Cl.: G06F 3/12

(54) **Einrichtung für die wahlweise Datenübertragung und Dateiübertragung**
Apparatus for selectively transfering data and files
Dispositif pour transférer sélectivement des données et des fichiers

(43) Veröffentlichungstag der Anmeldung: 20.04.1994
(73) Patentinhaber: LEUNIG GmbH, D-53721 Siegburg (DE)
(72) Erfinder: Buchala, Christoph, W-5210 Troisdorf (DE); Leunig, Peter, W-5206 Neunkirchen 2 (DE)
(74) Vertreter: Schoppe, Fritz, Dipl.-Ing.

(56) Entgegenhaltungen:
- US-A- 4 896 289
- IBM TECHNICAL DISCLOSURE BULLETIN. Bd. 20, Nr. 6, November 1977, NEW YORK US Seiten 2275 - 2277 R.K.BEBRY ET AL., 'PRINT AUTHORIZATION MATRIX'

## Beschreibung

Die Erfindung betrifft eine Einrichtung mit einer Mehrzahl von Rechnern, insbesondere PCs, für die wahlweise Datenübertragung (data transfer) von den Rechnern auf wenigstens ein gemeinsames Ausgabegerät, insbesondere einen Drucker, oder Dateiübertragung (file transfer) zwischen den Rechnern über die parallele Schnittstelle.

Es ist bekannt, an eine Mehrzahl von PCs einen oder mehrere gemeinsame Drucker anzuschließen. Hierzu wird die parallele Schnittstelle jedes PCs über ein übliches paralleles Druckerkabel an ein PSD (printer sharing device) angeschlossen, das seinerseits über ein übliches paralleles Druckerkabel an die parallele Schnittstelle des Druckers angeschlossen wird. Jeder PC kann dann Daten zum Drucker senden. Hat das PSD einen Speicher, können die PCs auch gleichzeitig Daten senden. Zwar ist das PSD erforderlich, jedoch ergibt sich durch den gemeinsamen Drucker eine erhebliche Kosteneinsparung im Vergleich zu mit jeweils eigenen Druckern ausgestatteten PCs. Um eine Dateiübertragung zwischen den PCs über die parallele Schnittstelle vorzunehmen, müssen die parallelen Druckerkabel abgezogen werden, und die Schnittstellen müssen durch das dem Dateiübertragungsprogramm beiliegende Spezialkabel verbunden werden. Die Umstellung von Datenübertragung auf Dateiübertragung zwischen den Rechnern ist daher mit dem Umstecken der Kabel verbunden, oder es müssen an den PCs zweite parallele Schnittstellen installiert werden, so daß der gleichzeitige Anschluß des üblichen Druckerkabels für den Datentransfer zum Drucker und des Spezialkabels für die Dateiübertragung zu einem anderen Rechner möglich ist. Die ist aufwendig und in der Praxis meistens nicht erwünscht.

Die parallele Schnittstelle ist ursprünglich nur für die Datenübertragung in einer Richtung - vom Rechner zum Drucker - gedacht (zwar gibt es inzwischen auch bidirektionelle Varianten der parallelen Schnittstelle, die jedoch wenig standardisiert und keineswegs bei allen Rechnern vorhanden sind). Der Rechner hat darum nur einen Datenausgang und der Drucker nur einen Dateneingang. Zusätzlich gibt es noch einige Steuerleitungen zum Drucker und einige Meldeleitungen von Drucker zum Rechner, die den Status des Druckers melden. Jedes Dateiübertragungsprogramm, das über die parallele Schnittstelle Daten zu einem Rechner übertragen wollte, müsste also die Meldeleitungen vom Drucker als Datenleitungen zum Rechner benutzen. Dafür ist erstens ein Spezialkabel mit überkreuzten Aderbelegungen nötig, und zweitens gibt es hierfür keinen Standard. Jeder Anbieter solcher Programme kann eine Belegung wählen, so daß theoretisch viele verschiedene Kabelbelegungen möglich sind.

Das US-Patent 4,896,289 offenbart eine Personalcomputer/Ausgabegerät-Schnittstelle, die für jeden der Mehrzahl von Personalcomputern jeweils eine Erweiterungskarte aufweist. Einer oder mehrere der Personalcomputer sind ferner mit einem elektronischen Ausgabegerät für eine Kommunikation mit demselben verschaltet. Die in dem US-Patent 4,896,289 offenbarte Schnittstelle ermöglicht die Übertragung von Textdateien zwischen ausgewählten der Personalcomputer für eine Ausgabe auf dem Ausgabegerät, das mit dem Personalcomputer, zu dem die Textdateien übertragen werden, verbunden ist.

In "IBM Technical Disclosure Bulletin", Bd. 20, Nr. 6, November 1977, Seiten 2275 - 2277, ist ein Host-Computer offenbart, der über eine Verbindungseinrichtung, bestehend aus Adaptern und einer Matrix, mit einer Mehrzahl von Druckern und Anzeigevorrichtungen verbunden ist. Die Verbindungseinrichtung bezieht sich ausschließlich auf die Übertragung von Druckerdaten zwischen dem Host-Computer, den Anzeigevorrichtungen und den Druckern. Über die Matrix können unterschiedlichen Druckern unterschiedliche Attribute, beispielsweise "lokale Verwendung" oder "gemeinsame Verwendung", zugewiesen werden.

Ausgehend von dem genannten Stand der Technik liegt der vorliegenden Erfindung die Aufgabe zugrunde, eine Einrichtung zu schaffen, die einen selektiven Datenaustausch zwischen Computern oder zwischen einem der Computer und zumindest einem Ausgabegerät durch die parallelen Schnittstellen derselben ermöglicht, wobei sowohl die Datenübertragung zu einem oder mehreren Ausgabegeräten als auch eine Dateiübertragung zwischen den Computern mittels herkömmlicher paralleler Druckerkabel durchgeführt werden kann.

Diese Aufgabe wird durch eine Vorrichtung für einen selektiven Datenaustausch gemäß Anspruch 1 sowie ein Verbindungselement für einen selektiven Datenaustausch gemäß Anspruch 6 gelöst.

Die vorliegende Erfindung schafft eine Einrichtung mit einer Mehrzahl von Rechnern, insbesondere PC's, wobei eine wahlweise Daten- oder Datei-Übertragung unabhängig vom Rechnertyp und vom eingesetzten Dateiübertragungsprogramm über herkömmliche parallele Druckerkabel und herkömmliche parallele Schnittstellen ermöglicht wird.

Durch diese Einrichtung erübrigt sich ein Umschalten oder das Umstecken der Kabel beim Übergang von data transfer auf file transfer und umgekehrt, man kommt mit der einen am PC normalerweise vorhandenen parallelen Schnittstelle aus und die Umstellung kann praktisch ohne zeitliche Unterbrechung erfolgen. Auch bei einer größeren Anzahl von Rechnern ist erfindungsgemäß die Dateiübertragung zwischen zwei beliebigen Rechnern möglich, ohne daß eine direkte Kabelverbindung zwischen diesen beiden Rechnern hergestellt werden muß.

Bei der bevorzugten Ausführungsform der erfindungsgemäßen Einrichtung wird von mindestens einem Rechner eine programmierbare Matrix programmiert, durch welche die für die Dateiübertragung erforderlichen Signalverbindungen realisiert werden. Diese Technik der variablen Matrixverbindung ermöglicht es, alle möglichen Kabelbelegungen und damit auch die für den jeweiligen file transfer nötige Belegung zu simulieren. Bei dieser Ausführungsform können mit der programmierbaren Matrix alle Signalausgänge vom Rechner mit allen Signaleingängen des verbundenen Rechners verknüpft werden.

Die Realisierung der bevorzugten Ausführungsform der Erfindung ist in Hardware- oder in kombinierter Hardware/Software-Technik möglich. Die Hardware-Lösung hat den Vorteil, daß sie die Übertragungsgeschwindigkeit zwischen den Rechnern nicht beeinträchtigt, und den Nachteil, daß sie viele logische Funktionen hat, die mit Standardbausteinen bei vertretbarem Aufwand kaum zu realisieren sind, so daß ein hochintegrierter Spezial-Chip erforderlich ist, um die Kosten und die Größe des Geräts zu senken.

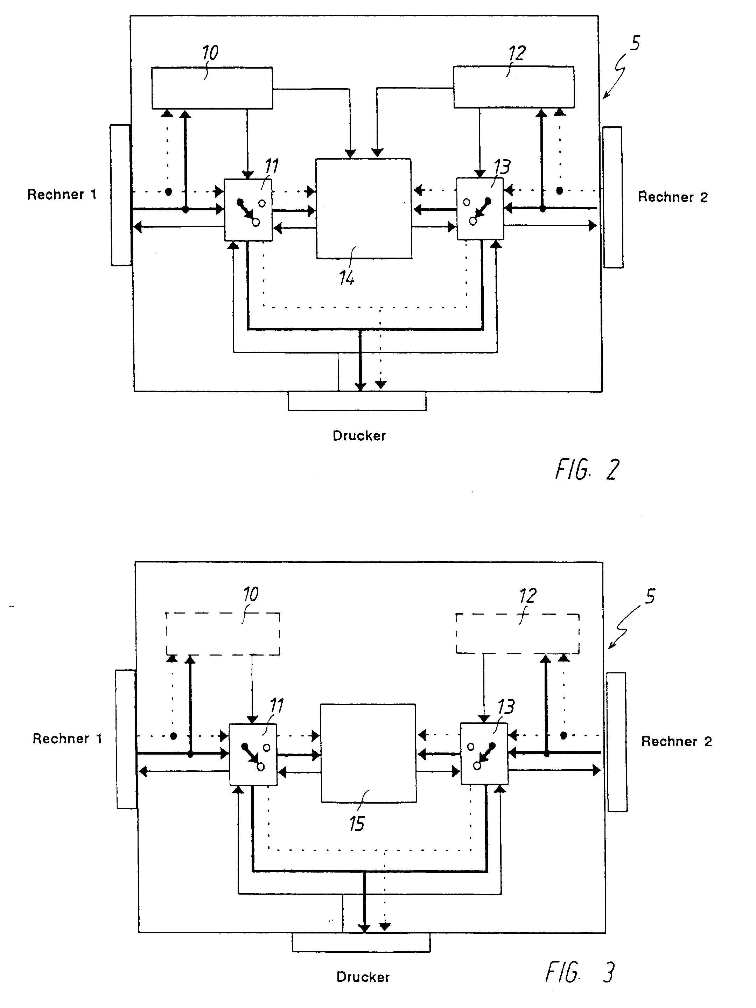

Die kombinierte Hardware/Software-Technik arbeitet mit einem Prozessor und ist weniger aufwendig. Matrix, Umschalter und Sequenz-Dekoder, vergl. Figur 2, können wenigstens teilweise durch Software ersetzt werden. Die verbleibenden Hardware-Komponenten können durch Standardbausteine realisiert werden. Der Nachteil dieser Technik ist, daß die Geschwindigkeit der Datenkommunikation je nach dem verwendeten Prozessor erheblich eingeschränkt sein kann.

Bei der bevorzugten Ausführungsform kann die Matrixprogrammierung durch ein Treiberprogramm (A), das die Verbindung programmiert und herstellt, und nach der Beendigung des Dateiübertragungsprogramms (B) durch ein weiteres Treiberprogramm (C) erfolgen, das die Dateiübertragungsverbindung abbaut und die Druckerverbindung wieder herstellt. Das Programm (A) hat die Aufgabe, die Matrix gemäß dem verwendeten Dateiübertragungsprogramm zu konfigurieren und der Schaltung damit das Signal zur Aufhebung der Verbindung zum Drucker und zum Aufbau der Verbindung zu einem anderen Rechner zu geben. Wenn die Sequenz des Programms (A) übermittelt ist, wird automatisch die Verbindung zum Drucker unterbrochen und auf die Matrix umgeschaltet. Der Zielrechner kann dann noch drucken; daher ist noch kein file transfer möglich. Wenn der Zielrechner auch diese Programmsequenz geschickt hat, wird auch er auf die Matrix umgeschaltet. Damit ist die Rechner-Rechner-Verbindung aktiviert.

Das Programm (B) ist ein beliebiges File-Transfer-Programm, also ein am Markt verfügbares Programm, wie z.B. Laplink, FastLynx, Brooklyn Bridge, oder auch ein zukünftig auf den Markt kommendes Dateiübertragungsprogramm. Das Programm (C) wird nach der Beendigung des File-Transfer-Programms aufgerufen, um die Verbindung Rechner-Rechner wieder aufzulösen und die Verbindung Rechner-Drucker wieder herzustellen. Die Abfolge der Programme (A) bis (C) kann selbstverständlich durch ein Batchprogramm ausgelöst werden. Schließlich kann ein Programm (D) installiert sein, das dazu dient, sich selbst ein Programm (A) zu generieren, wenn ein File-Transfer-Programm (B) verwendet wird, dessen Kabelbelegung neu ist. Die Kabelbelegung ist aus dem mit dem File-Transfer-Programm mitgelieferten Handbuch zu entnehmen.

Bei einer anderen Ausführungsform der erfindungsgemäßen Einrichtung ist eine festdefinierte Dateiübertragungsverbindung vorhanden, die durch das Polling oder eine spezielle Signalfolge von beiden Rechnern aktiviert wird. Diese Ausführungsform kann zur Anwendung kommen, wenn man nur auf einen Softwarehersteller oder eine Gruppe von Softwareherstellern zielt, deren File-Transfer-Programm mit derselben Kabelbelegung arbeitet. Die aufwendige programmierbare Matrix kann dann ohne Nachteil durch eine feste Leitungsverknüpfung ersetzt werden.

Mit der erfindungsgemäßen Einrichtung können bis zu 62 000 Zeichen/s zum Drucker übertragen werden, und es wird die volle Geschwindigkeit des Dateiübertragungsprogramms gestützt. Trotz der Benutzung desselben materiellen Kabels zum Drucken und zur Dateiübertragung werden deren Höchstgeschwindigkeiten nicht beeinträchtigt.

Die Erfindung wird nachfolgend an Hand der Zeichnung näher beschrieben. Es zeigen
Figur 1 eine Ausführungsform der Einrichtung mit zwei Rechnern in schematischer Darstellung;
Figur 2 den prinzipiellen Aufbau einer ersten Ausführungsform des Verbindungsglieds mit programmierbarer Matrix;
Figur 3 den prinzipiellen Aufbau einer zweiten Ausführungsform des Verbindungsglieds mit fester Verdrahtung;
Figur 4 eine Ausführungsform der Schaltung in dem in Figur 2 gezeigten Verbindungsglied;
Figur 5a die Übersicht über einen Teil des eingesetzten ASIC; und
Figur 5b die Übersicht über den anderen Teil des eingesetzten ASIC.

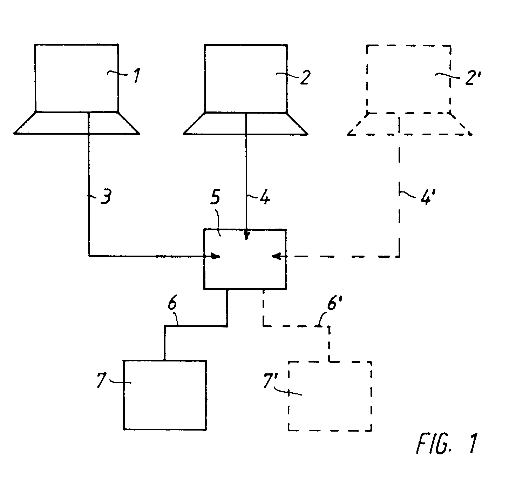

Nach der Figur 1 ist die parallele Schnittstelle eines ersten Rechners 1 über ein übliches paralleles Druckerkabel 3 an einen ersten parallelen Eingang eines Verbindungsglieds 5 angeschlossen. Ebenso ist die parallele Schnittstelle des zweiten Rechners 2 über ein übliches paralleles Druckerkabel 4 an einen zweiten Paralleleingang des Verbindungsglieds 5 angeschlossen. Das Verbindungsglied 5 kann mehr als zwei Eingänge entsprechend der Anzahl der anzuschließenden Rechner aufweisen. So kann ein dritter Rechner 2' über ein weiteres paralleles Druckerkabel 4' an einen dritten Eingang des Verbindungsglieds 5 angeschlossen sein, wie gestrichelt dargestellt ist. Der Ausgang des Verbindungsglieds 5 ist über ein übliches paralleles Druckerkabel 6 an den Paralleleingang eines Druckers 7 angeschlossen. Das Verbindungsglied 5 kann wenigstens einen weiteren Ausgang haben, der über ein paralleles Druckerkabel 6' an den Paralleleingang wenigstens eines weiteren Druckers 7' angeschlossen ist, wie es gestrichelt dargestellt ist. Generell können also die Positionen 4'2' eine Mehrzahl angeschlossener Rechner und die Positionen 6'7' eine Mehrzahl angeschlossener Ausgabegeräte bedeuten.

Das Verbindungsglied hat einerseits die Funktion eines herkömmlichen PSD, d.h. jeder angeschlossene Rechner kann über Glied 5 Daten auf den Drucker 7 senden. Hat das Verbindungsglied 5 einen Speicher, können die Rechner auch gleichzeitig Druckdaten senden. Hat das Gerät 5 keinen Speicher, werden die Daten der Sendung zuerst gedruckt, die den Drucker 7 zuerst erreicht.

Um andererseits zwischen den Rechnern 1 und 2 eine Datei-übertragung über die auch zum Drucken benutzten Kabel 3 und 4 zu ermöglichen, wird in den Rechnern 1 und 2 außer dem Dateiübertragungsprogramm (B) ein kleines Softwareprogramm installiert, das die dazu erforderliche Kabel- und Steckerbelegung schaltungsmäßig realisiert und die Verbindung dieser Kabel in ihrer neuen Zuordnung in dem Verbindungsglied 5 herstellt und so den Datenkanal 3,5,4 zu dem Zielrechner an das dem Programm (B) zugeordnete Spezialkabel anpaßt, ohne daß dieses Kabel materiell angeschlossen zu werden braucht. Nunmehr ist zwischen den Rechnern 1 und 2 die Dateiübertragungsverbindung hergestellt und die Dateiübertragung in beiden Richtungen möglich.

Nach dem Ende der Dateiübertragung erhält das Verbindungsglied 5 aus beiden Rechnern den Befehl, die für den Datentransfer normale Belegung der Kabel und Stecker und in dem Glied 5 die Verbindung zu dem Drucker 7 wieder herzustellen.

In Figur 2 sind die acht Datenleitungen vom Rechner als dicke Linien, die Steuerleitungen vom Rechner als gepunktete Linien und die Meldeleitungen vom Drucker als dünne Linien dargestellt. Jedem der beiden Rechner 1,2 ist ein Sequenz-Dekoder 10 bzw. 12 zugeordnet, der die von den Rechnern kommenden Steuer sequenzen zum Auf- und Abbau der File-Transfer-Verbindung entschlüsselt. Die Sequenzen müssen so beschaffen sein, daß sie im normalen Datenstrom nicht vorkommen können. Zweckmäßigerweise nimmt man dazu die Steuerleitungen vom Rechner mit hinzu und legt sie auf einen Zustand, der im normalen Druckbetrieb nicht vorkommen kann oder darf. Die Sequenz-Dekoder 10,12 empfangen bei dieser Ausfiihrungsform der Erfindung zwei Informationen: Die Programmierung der Matrix und den Befehl zum Aufbau der Verbindung. Bei mehr als zwei Rechnern können sie auch noch die Nummer des angewählten Zielrechners enthalten. Nach Empfang der vollständigen Sequenz programmiert der Dekoder 10 eine programmierbare Matrix 14 und schaltet durch den Umschalter 11 alle Leitungen vom und zum Rechner 1 statt auf den Drucker 7 um auf die eine Seite der Matrix 14. Die Rechner-Rechner-Verbindung wird damit noch nicht hergestellt, sondern erst dann, wenn auch der Rechner 2 durch eine identische Sequenz seine Bereitschaft zur Aufnahme der Verbindung signalisiert. Die Dekodierung erfolgt analog zu Rechner 1 durch den Sequenz-Dekoder 12 und die Umschaltung durch den Umschalter 13. Die Verbindung ist damit hergestellt, und beide Rechner können miteinander kommunizieren, als wären sie durch ein Spezialkabel direkt miteinander verbunden.

Nach der Beendigung des File Transfers erfolgt der Abbau der Verbindung zwischen den Rechnern wiederum durch eine Sequenz von den Rechnern 1 und 2, die so gestaltet sein muß, daß sie nicht in der normalen Datenkommunikation zwischen den Rechnern vorkommen kann. Die Verbindung wird unterbrochen, sobald einer der beiden Rechner 1 oder 2 die Abbausequenz sendet. Er ist dann automatisch wieder durch Umschaltung des Schalters 11 bzw. 13 mit dem Drucker 7 verbunden. Der andere Rechner kann erst dann wieder drucken, wenn auch er die Sequenz zum Abbau der Verbindung gesendet hat.

Der Vorteil dieser Ausführungsform mit programmierbarer Matrix ist der, daß sie unabhängig von dem File-Transfer-Programm ist, weil sie jedes denkbare Spezialkabel simulieren kann.

Bei der in Figur 3 gezeigten Ausführungsform des Verbindungsglieds wurde die programmierbare Matrix 14 durch eine feste Verdrahtung ersetzt. Die Sequenz-Dekoder 10 und 12 dienen lediglich zur Ansteuerung der Umschalter 11 bzw. 13. Diese Ausführungsform gestattet eine weitere Verringerung des Aufwands dadurch, daß man auf Sequenzen ganz verzichtet und eine bestimmte Kombination von Steuerleitungen vom jeweiligen Rechner 1,2 dazu benutzt, die Umschalter 11 und 13 zu betätigen. Die Sequenz-Dekoder 10,12 fallen dann weg. Diese Lösung ist sehr preiswert, aber nicht sehr sicher gegen ungewolltes Umschalten. Die Ausführungsform nach Figur 3 kommt dann zum Einsatz, wenn mit einem gleichbleibenden File-Transfer-Programm gearbeitet wird.

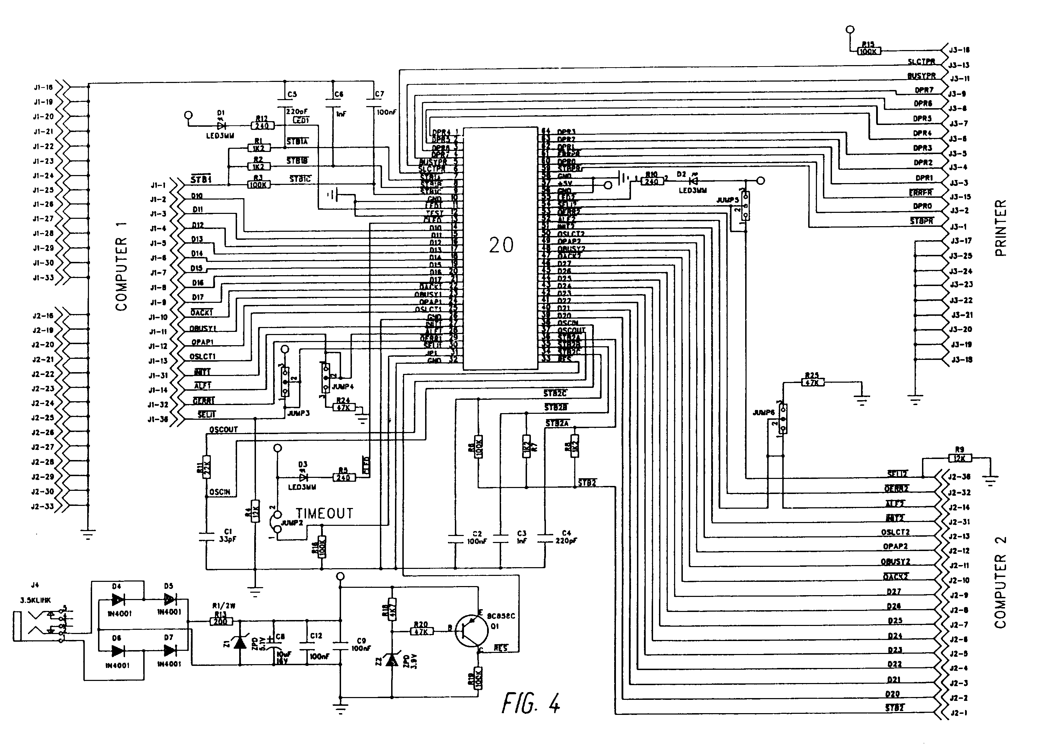

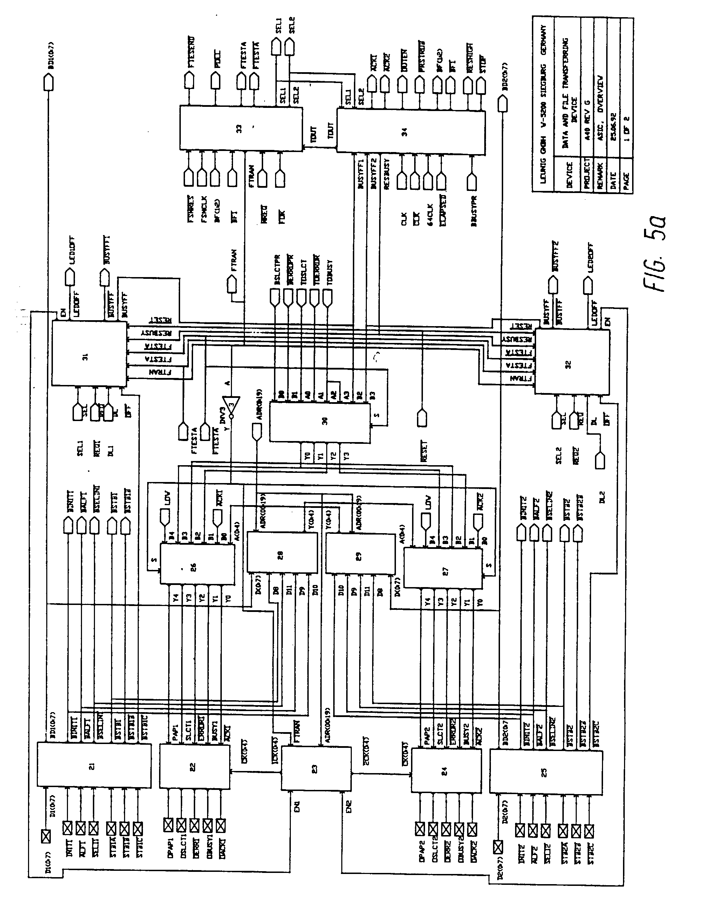

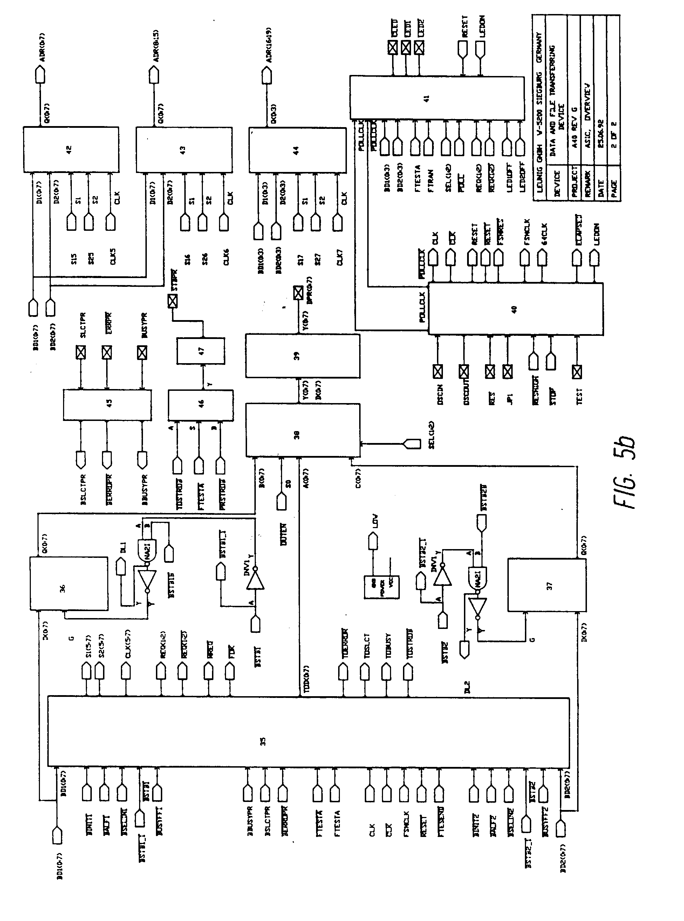

Nachfolgend wird eine Ausführungsform der Erfindungsgemäßen Einrichtung ausfiihrlicher beschrieben.
1. Das Gerät
   Im folgenden wird ein Implementierung des Verbindungsglieds zwischen zwei Personal Computern (PC) und einem Drucker gezeigt. Das Gerät ermöglicht zum einen eine vollautomatische Umschaltung zwischen Rechnern, die über gemeinsame Drucker verfügen können, und zum anderen die Verbindung zwischen beiden Rechnern mittels einer Emulation eines beliebig definierbaren Kabels. Benötigt werden dabei ausschließlich die standardisierten Centronics-Parallelschnittstellen der beiden Rechner und des Druckers sowie auch die üblichen parallelen Druckerkabel, die normalerweise zur Verbindung eines Rechners mit einem parallelen Drucker dienen.
   Das Gerät verfügt über keinen Speicher, d.h. die Rechner können lediglich nacheinander und nicht gleichzeitig drucken. Es ist eine reine Hardware-Ausführungsform der oben beschriebenen Erfindung mit dem Einsatz eines hochintegrierten Spezial-Chips (ASIC).
   Da das Gerät sowohl mehrere Dateiübertragungsprogramme als auch die Emulation eines beliebigen File-Transfer-Kabels unterstützt, werden hier die Treiberprogramme (A) und (C) zum entsprechenden Auf- und Abbauen der PC-PC-Verbindung benötigt. Das Gerät setzt voraus, daß die Kabeldefinition (Matrix der Signalnalverbindungen), die in der Aufbausequenz kodiert und von beiden Rechnern geschickt wird, jeweils identisch ist. Außerdem unterstützt das Gerät eine Selbsttestfunktion, wobei der Druckerport durch ein übliches paralleles Druckerkabel mit einem von beiden Rechnerports verbunden wird (Loopback-Verfahren), was automatisch erkannt und optisch gemeldet wird. Während des Selbsttests werden die Platine, die Schnittstellen und das Kabel selbst ausführlich getestet.
2. Die Schaltung (Figur 4)
   Die Schaltung des Geräts wird weitgehend in einen ASIC-Schaltkreis (20) integriert. Die externe Beschaltung des ASIC sorgt insbesondere für:
   - Versorgung des Geräts mit Strom vom DC- oder AC-Netzteil,
   - Initialisieren des Chips (Signal "/RES"),
   - Unterdrückung der Störungen im Kabel (Signale "/STB1" und "/STB2"),
   - Wahl zwischen zwei vorgegebenen Zeitperioden, die als Kriterium für das Ende eines sog. Druckjobs benötigt werden (TIMOUT),
   - Visualisierung der aktuellen Portverbindung mittels drei Leuchtdioden:
      D1 für die Rechner 1 - Drucker - Verbindung
      D2 für die Rechner 2 - Drucker - Verbindung
      D3 für die Rechner 1 - Rechner 2 - Verbindung.
3. Der ASIC (Figuren 5a und 5b)
   Wenn kein Rechner den Drucker benötigt, leuchten die entsprechenden Leuchtdioden des Geräts (Fig. 4) abwechselnd im Takt von ca. 0,5 s. Wenn eine Verbindung (PC-Drucker oder PC-PC) hergestellt wird, leuchtet eine von den drei Leuchtdioden permanent. Dafür sorgen die Signale "/LED1", "/LED2" und "/CLED" des LED-Steuermoduls 41. Für den Auf- und Abbau der jeweiligen Verbindung ist die State-Machine 33 zuständig, die das Steuerwerk des gesamten Schaltkreises bildet.
   Der Start jedes Druckjobs wird durch Modul 31 (für den Rechner 1) oder 32 (für den Rechner 2) erkannt und durch das Modul 34 dem Steuerwerk 33 mitgeteilt (für jeden Rechner ein "BUSYFF" und ein "BF"-Signal). Die jeweilige Rechner-Drucker-Verbindung wird durch die Aktivierung der Signale "SEL1" und "SEL2" entsprechend realisiert. Von diesem Moment ab sorgt das Modul 34 für die notwendige Ein- und Ausgabesynchronisierung der Druckdaten. Das Druckjobende wird aufgrund einer abgelaufenen Zeitperiode, in der keine Druckzeichen mehr vom Rechner kamen, in dem Timing-Controller 40 festgestellt. In dem Moment wird das Signal "/ELAPSED" aktiviert, das nach entsprechender Synchronisierung in 34 in Form eines Signals "TOUT" an das Steuerwerk 33 geleitet wird. Die State-Machine 33 aktiviert das "/POLL"-Signal immer dann, wenn keine Verbindung aktiv ist. Das Modul 35 zur Erkennung und Generierung der Sequenzen entschlüsselt die Ein- und Ausschaltsequenzen der PC-PC-Verbindung. Nach Empfang der vollständigen Aufbausequenz bereitet es in dem Konfigurationsregister 42,43,44 eine Matrixdefinition für die erwünschte Kabelemulation vor. Solange nur ein Rechner eine Aufbausequenz abgeschickt hat, wird nur ein entsprechendes Signal "REQ" aktiviert, das die Verbindung PC-Drucker im jeweiligen Modul 31 oder 32 sicherheitshalber blockiert. Darüber hinaus wird von diesem Moment an die Leuchtdiode D3 des Geräts (Fig. 4) abwechselnd mit der dem anderen PC zugewiesenen Leuchtdiode blinken (Signal "/CLED" im Modul 41). Erst wenn beide Einschaltsequenzen empfangen wurden, wird dies dem Steuerwerk 33 mitgeteilt. Das erfolgt dadurch, daß der Dekoder 35 ein Signal "/MREO" (Verundung der "REQ1"- und "REQ2"-Signale) aktiviert. Das Steuerwerk 33 stellt durch das Signal "FTRAN" an die Multiplexer 26 und 27 die File-Transfer-Verbindung her. Die Leuchtdiode D3 (Fig. 4) beginnt permanent zu leuchten. Jetzt können die beiden Rechner miteinander kommunizieren. Die Dateiübertragung von einem Rechner zu dem anderen nutzt die Module 21-28-27-24 und in der Gegenrichtung die Module 25-29-26-22. Weil die durch die Matrix zu simulierenden Kabel in beiden Richtungen identische Überkreuzungen aufweisen, sind die Matrizen 28 und 29 identisch, und sie teilen sich ein gemeinsames Konfigurationsregister, bestehend aus den Moduln 42,43,44.
   Sobald einer der Rechner die Verbindungsabbausequenz sendet, wird durch das Modul 35 das entsprechende "REQ"-Signal und damit auch automatisch das gemeinsame "/MREQ"-Signal deaktiviert. Das Steuerwerk 33 nimmt das Signal "FTRAN" zurück und geht in den "/POLL"-Zustand, was bedeutet, daß die Rechner-Rechner-Verbindung abgebaut wurde. Aus Sicherheitsgründen wird der andere Rechner erst dann durch das Modul 31 bzw. 32 auf den Drucker geschaltet, wenn auch er seine Abschaltsequenz sendet.
   Das Modul 35 dient auch dem Selbsttest (Signal "FTESTA" aktiv). Es erzeugt die dafür nötigen wechselnden Muster, die durch die Multiplexer 38,46 an den Druckerport und den Multiplexer 30 an die Rechnerports angelegt werden. Diese Muster werden durch das Loopback-Kabel an den jeweils anderen Port übertragen und wiederum im Modul 35 verifiziert.
   Modul 23 schaltet die unbenutzten Ports in den Tri-State-Zustand. Module 36 und 37 dienen als Latch für die Druckdaten beider Rechner. Die Module 21, 25 und 45 sowie 22, 24 und 47 sind I/O-Buffer.

Die erfindungsgemäße Einrichtung erlaubt bei einer Mehrzahl von Rechnern den Betrieb eines gemeinsamen Druckers (printer sharing) und die Dateiübertragung zwischen den Rechnern bei geringem Aufwand an Hardware und hoher Bedienerfreundlichkeit.

## Patentansprüche

1. Vorrichtung für einen selektiven Datenaustausch zwischen jeweils zwei einer Mehrzahl von Computern (1, 2, 2') oder zwischen einem jeweiligen der Computer (1, 2, 2') und zumindest einem Ausgabegerät (7, 7') durch die parallelen Schnittstellen derselben, mit folgenden Merkmalen:
einer Mehrzahl von Computern (1, 2, 2'), wobei jeder der Computer eine parallele Druckerschnittstelle aufweist;
zumindest einem gemeinsam verwendeten Ausgabegerät (7, 7'), das eine parallele Computerschnittstelle aufweist; und
einem Verbindungselement (5) mit zumindest zwei Computerschnittstellen und zumindest einer Ausgabegerätschnittstelle,
wobei die parallelen Ausgabegerätschnittstellen der Mehrzahl von Computern (1, 2, 2') durch parallele Druckerkabel (3, 4, 4') mit den Computerschnittstellen des Verbindungselements (5) verbunden sind, und die parallele Computerschnittstelle des zumindest einen gemeinsam verwendeten Ausgabegeräts (7, 7') durch ein paralleles Druckerkabel (6, 6') mit der zumindest einen Ausgabegerätschnittstelle des Verbindungselements (5) verbunden ist,
wobei die parallelen Druckerkabel (3, 4, 4', 6, 6') Steuer- und Status-Leitungen zum Überwachen eines Status des Ausgabegeräts (7, 7') während eines normalen Betriebsmodus aufweisen;
dadurch gekennzeichnet, daß das Verbindungselement (5) eine Schalteinrichtung (11, 13, 14; 15) aufweist, wobei die Schalteinrichtung (11, 13, 14; 15) während des normalen Betriebsmodus zumindest eine Computerschnittstelle des Verbindungselements (5) mit der zumindest einen Ausgabegerätschnittstelle des Verbindungselements (5) verbindet, um einen Datenaustausch zwischen dem Computer (1, 2, 2'), der mit der Computerschnittstelle des Verbindungselements (5) verbunden ist, und dem Ausgabegerät (7, 7'), das mit der Ausgabegerätschnittstelle des Verbindungselements (5) verbunden ist, zu ermöglichen, und
wobei die Schalteinrichtung (11, 13, 14; 15) auf das Empfangen einer Datensequenz auf den Steuer- und Status-Leitungen, die während des normalen Betriebsmodus nicht auftritt, hin die zumindest zwei Computerschnittstellen des Verbindungselements (5) durch die Verwendung einer Zuordnung der Leitungen, die eine spezifische Datenübertragung zwischen den zumindest zwei Computern (1, 2, 2'), die mit den zumindest zwei Computerschnittstellen des Verbindungselements (5) verbunden sind, auf den parallelen Druckerkabeln ermöglicht, verbindet.

2. Vorrichtung für eine selektive Datenübertragung nach Anspruch 1, dadurch gekennzeichnet, daß die Mehrzahl von Computern Personalcomputer sind.

3. Vorrichtung für eine selektive Datenübertragung gemäß Anspruch 1 oder 2, dadurch gekennzeichnet, daß das gemeinsam verwendete Ausgabegerät (7, 7') ein Drucker ist.

4. Vorrichtung für eine selektive Datenübertragung gemäß einem der Ansprüche 1 - 3, dadurch gekennzeichnet, daß die Schalteinrichtung (11, 13, 14) eine programmierbare Matrix (14) aufweist, und daß zumindest ein Computer (1, 2, 2') der Mehrzahl von Computern eine Einrichtung zum Programmieren der programmierbaren Matrix zum Definieren unterschiedlicher Zuordnungen der Leitungen aufweist, die durch die Schalteinrichtung (11, 13, 14) zum definierten Verbinden der zumindest zwei Computerschnittstellen des Verbindungselements (5) miteinander verwendet werden, um eine Datenübertragung gemäß unterschiedlichen Dateiübertragungsprotokollen zwischen Computern, deren parallele Druckerschnittstellen mit den zumindest zwei Computerschnittstellen des Verbindungselements (5) verbunden sind, zu ermöglichen.

5. Vorrichtung zur selektiven Datenübertragung gemäß Anspruch 4, dadurch gekennzeichnet, daß die programmierbare Matrix (14) durch ein erstes Treiberprogramm programmiert wird, das die Verbindung zwischen den zumindest zwei Computerschnittstellen des Verbindungselements (5) unter Verwendung einer spezifischen Zuordnung der Leitungen, die einem spezifischem Dateiübertragungsprotokoll zugeordnet ist, programmiert und erzeugt, wobei, nach dem Abschluß eines Dateiübertragungsprogramms unter Verwendung des Dateiübertragungsprotokolls, ein zweites Treiberprogramm die Verbindung für die Dateiübertragung abbricht und eine Verbindung der zumindest einen Computerschnittstelle des Verbindungselements (5) mit der zumindest einen Ausgabegerätschnittstelle des Verbindungselements (5) wiederherstellt.

6. Verbindungselement (5) für einen selektiven Datenaustausch zwischen jeweils zwei einer Mehrzahl von Computern (1, 2, 2'), wobei jeder der Computer (1, 2, 2') eine parallele Druckerschnittstelle aufweist, oder zwischen einem jeweiligen der Computer und zumindest einem Ausgabegerät (7, 7'), das eine parallele Computerschnittstelle aufweist, wobei das Verbindungselement (5) zumindest zwei Computerschnittstellen und zumindest eine Ausgabegerätschnittstelle aufweist,
wobei die parallelen Druckerschnittstellen der Mehrzahl von Computern (1, 2, 2')durch parallele Druckerkabel (3, 4, 4') mit den Computerschnittstellen des Verbindungselements (5) verbunden sind, und wobei die parallele Computerschnittstelle des zumindest einen gemeinsam verwendeten Ausgabegeräts (7, 7') durch parallele Druckerkabel (6, 6') mit der zumindest einen Ausgabegerätschnittstelle des Verbindungselements (5) verbunden ist,
wobei die parallelen Druckerkabel (3, 4, 4', 6, 6') Steuer- und Status-Leitungen zum Überwachen eines Status des Ausgabegeräts (7, 7') während eines normalen Betriebsmodus aufweisen,
dadurch gekennzeichnet, daß das Verbindungselement (5) eine Schalteinrichtung (11, 13, 14; 15) aufweist,
wobei die Schalteinrichtung (11, 13, 14; 15) zumindest eine Computerschnittstelle des Verbindungselements (5) während des normalen Betriebsmodus mit der zumindest einen Ausgabegerätschnittstelle des Verbindungselements (5) verbindet, um einen Datenaustausch zwischen dem Computer (1, 2, 2'), der mit der Computerschnittstelle des Verbindungselements (5) verbunden ist, und dem Ausgabegerät (7, 7'), das mit der Ausgabegerätschnittstelle des Verbindungselements (5) verbunden ist, zu ermöglichen, und
wobei die Schalteinrichtung (11, 13, 14; 15) die zumindest zwei Computerschnittstellen des Verbindungselements (5) auf das Empfangen einer Datensequenz auf den Steuer- und Status-Leitungen, die während des normalen Betriebsmodus nicht auftritt, hin durch die Verwendung einer Zuordnung der Leitungen, die eine spezifische Datenübertragung zwischen den zumindest zwei Computern (1, 2, 2'), die mit den zumindest zwei Computerschnittstellen des Verbindungselements (5) verbunden sind, auf den parallelen Druckerkabeln (3, 4, 4') ermöglicht, verbindet.

7. Verbindungselement (5) gemäß Anspruch 6, dadurch gekennzeichnet, daß die Schalteinrichtung (11, 13, 14) eine programmierbare Matrix (14) aufweist, und daß zumindest ein Computer (1, 2, 2') der Mehrzahl von Computern eine Einrichtung zum Programmieren der programmierbaren Matrix (14) zum Definieren unterschiedlicher Zuordnungen der Leitungen aufweist, die durch die Schalteinrichtung (11, 13, 14) zum definierten Verbinden der zumindest zwei Computerschnittstellen des Verbindungselements (5) miteinander verwendet werden, um eine Datenübertragung gemäß unterschiedlichen Dateiübertragungsprotokollen zwischen Computern, deren parallele Druckerschnittstellen mit den zumindest zwei Computerschnittstellen des Verbindungselements (5) verbunden sind, zu ermöglichen.

8. Verbindungselement (5) gemäß Anspruch 7, dadurch gekennzeichnet, daß die Matrix (14) durch ein erstes Treiberprogramm programmiert wird, das die Verbindung zwischen den zumindest zwei Computerschnittstellen des Verbindungselements (5) unter Verwendung einer spezifischen Zuordnung der Leitungen, die einem spezifischen Dateiübertragungsprotokoll zugeordnet ist, programmiert und erzeugt, wobei, nach dem Abschluß eines Dateiübertragungsprogramms unter Verwendung des Dateiübertragungsprotokolls, ein zweites Treiberprogramm die Verbindung für die Dateiübertragung abbricht und eine Verbindung der zumindest einen Computerschnittstelle des Verbindungselements (5) mit der zumindest einen Ausgabegerätschnittstelle des Verbindungselements (5) wiederherstellt.

## Claims

1. Apparatus for a selective data exchange between each two of plurality of computers (1, 2, 2'), or between each of that computers (1, 2, 2') and at least one output device (7, 7') through their parallel ports, said apparatus comprising
a plurality of computers (1, 2, 2') with each of that computers having a parallel printer port;
at least one shared output device (7, 7') having a parallel computer port;
a connecting element (5) having at least two computer ports and at least one output device port;
said parallel printer ports of said plurality of computers (1, 2, 2') being connected to said computer ports of said connecting element (5) by parallel printer cables (3, 4, 4') and said parallel computer port of said at least one shared output device (7, 7') being connected to said at least one output device port of said connecting element (5) by parallel printer cables (6, 6');
said parallel printer cables (3, 4, 4', 6, 6') comprising control and status lines for monitoring a status of the output device (7, 7') during a normal operation mode;
characterized in that
said connecting element (5) comprises a switching means (11, 13, 14; 15), said switching means (11, 13, 14; 15) connecting at least one computer port thereof to said at least one output device port thereof to enable a data exchange between the computer (1, 2, 2') connected to said computer port of said connecting element (5) and the output device (7, 7') connected to said output device port of said connecting element (5), during the normal operation mode;
said switching means (11, 13, 14; 15) connecting at least two computer ports of said connecting element (5) by using a cable allocation, which enables a particular data transfer between the at least two computers (1, 2, 2') connected to the at least two computer ports of said connecting element (5) on said parallel printer cables, upon receiving a data sequence on said control and status lines which does not occur during the normal operation mode.

2. Apparatus for a selective data transfer according to claim 1, characterized in that said plurality of computers are personal computers.

3. Apparatus for a selective data transfer according to claim 1 or 2, characterized in that said shared output device (7, 7') is a printer.

4. Apparatus for a selective data transfer according to one of claims 1 to 3, characterized in that said switching means (11, 13, 14) comprises a programmable matrix (14), and that at least one computer (1, 2, 2') of said plurality of computers includes means for programming said programmable matrix to define different cable allocations which are used for a defined connection of at least two computer ports of said connecting element (5) with each other in order to allow a data transfer in accordance with different file transfer protocols between computers, the parallel printer ports of which are connected to the at least two computer ports of said connecting element (5).

5. Apparatus for a selective data transfer according to claim 4, characterized in that said programmable matrix (14) is programmed by a first driver program, which programs and generates said connection between the at least two computer ports of said connecting element (5) using a particular cable allocation associated with a particular file transfer protocol, and, after completion of a file transfer program using said file transfer protocol, a second driver program aboards said connection for file transfer and restores connection of at least one computer port of said connecting element (5) to the at least one output device port of said connecting element (5).

6. Connecting element (5) for a selective data exchange between each two of a plurality of computers (1, 2, 2'), each of said computers (1, 2, 2') having a parallel printer port, or between each of said computers and at least one output device (7, 7') having a parallel computer port, said connecting element (5) comprising at least two computer ports and at least one output device port, wherein
said parallel printer ports of said plurality of computers (1, 2, 2') are connected to said computer ports of said connecting element (5) by parallel printer cables (3, 4, 4') and said parallel computer port of said at least one shared output device (7, 7') being connected to said at least one output device port of said connecting element (5) by parallel printer cables (6, 6');
said parallel printer cables (3, 4, 4', 6, 6') comprises control and status lines for monitoring a status of the output device (7, 7') during normal operation mode;
characterized in that said connecting element (5) comprises a switching means (11, 13, 14; 15),
said switching means (11, 13, 14; 15) connecting at least one computer port of said connecting element (5) to said at least one output device port of said connecting element (5) to enable a data exchange between the computer (1, 2, 2') connected to said computer port of said connecting element (5) and the output device (7, 7') connected to said output device port of said connecting element (5), during the normal operation mode;
said switching means (11, 13, 14; 15) connecting said at least two computer ports of said connecting element (5) by using a cable allocation, which enables a particular data transfer between the at least two computers (1, 2, 2') connected to the at least two computer ports of said connecting element (5) on said parallel printer cables (3, 4, 4'), upon receiving a data sequence on said control and status lines which does not occur during the normal operation mode.

7. Connecting element (5) according to claim 6, characterized in that said switching means (11, 13, 14) comprises a programmable matrix (14) and said at least one computer (1, 2, 2') of said plurality of computers includes means for programming said programmable matrix (14) for defining different cable allocations, used by said switching means (11, 13, 14) to connect defined the at least two computer ports of said connecting element (5) together, which enables a data transfer in accordance with different file transfer protocols between computers, the parallel printer ports of which are connected to the at least two computer ports of said connecting element (5).

8. Connecting element (5) according to claim 7, characterized in that said matrix (14) is programmed by a first driver program, which programs and generates said connection between the at least two computer ports of said connecting element (5) using a particular cable allocation associated with a particular file transfer protocol, and, after completion of a file transfer program using said file transfer protocol, a second drive program aboards said connection for file transfer and restores connection of at least one computer port of said connecting element (5) with the at least one output device port of said connecting element (5).

## Revendications

1. Dispositif pour transférer des données de manière sélective entre deux d'une pluralité d'ordinateurs (1, 2, 2') à chaque fois ou entre l'un respectif des ordinateurs (1, 2, 2') et au moins un dispositif de sortie (7, 7') au moyen des interfaces parallèles de ces derniers, muni des aménagements suivants :
une pluralité d'ordinateurs (1, 2, 2'), dans laquelle chacun des ordinateurs présente une interface parallèle pour une imprimante ;
au moins un dispositif de sortie (7, 7') à usage collectif, lequel présente une interface parallèle pour ordinateur ; et
un élément de raccordement (5) muni d'au moins deux interfaces pour ordinateur et au moins une interface pour dispositif de sortie,
dans lequel les interfaces parallèles pour dispositif de sortie de la pluralité d'ordinateurs (1, 2, 2') sont reliées à l'interface pour ordinateur de l'élément de raccordement (5) au moyen d'un câble parallèle (3, 4, 4') pour imprimante, et l'interface parallèle pour ordinateur de l'un au moins des dispositifs de sortie (7, 7'à usage collectif est reliée, à l'aide d'un câble parallèle (6, 6') pour imprimante, à au moins une interface du dispositif de sortie de l'élément de raccordement (5),
dans lequel les câbles parallèles pour imprimante comportent des conducteurs de commande et des conducteurs d'état pour la surveillance d'un état du dispositif de sortie (7, 7') pendant un mode de fonctionnement normal ;
caractérisé en ce que l'élément de raccordement (5) comporte un mécanisme de manoeuvre (11, 13, 14; 15) et le mécanisme de manoeuvre (11, 13, 14; 15) relie pendant le mode de fonctionnement normal au moins une interface pour ordinateur de l'élément de raccordement (5) à l'une au moins des interfaces pour dispositif de sortie de l'élément de raccordement (5), de façon à rendre possible une transmission de données entre l'ordinateur (1, 2, 2') qui est relié à l'interface pour ordinateur de l'élément de raccordement (5), et le dispositif de sortie (7, 7') qui est relié à l'interface pour dispositif de sortie de l'élément de raccordement (5), et
dans lequel le mécanisme de manoeuvre (11, 13, 14; 15), sur réception d'une séquence de données sur les conducteurs de commande et les conducteurs d'état, laquelle ne se produit pas pendant le mode de fonctionnement normal, relie ainsi les deux interfaces au moins pour ordinateur de l'élément de raccordement (5) par l'utilisation d'un arrangement des conducteurs qui permet un transfert de données spécifique entre les deux ordinateurs au moins (1, 2, 2'), lesquels sont reliés aux deux interfaces au moins pour ordinateur de l'élément de raccordement (5), sur les câbles parallèles pour imprimante.

2. Dispositif pour transférer des données de manière sélective conforme à la revendication 1, caractérisé en ce que la pluralité d'ordinateurs est constituée d'ordinateurs personnels.

3. Dispositif pour transférer des données de manière sélective conforme à la revendication 1 ou à la revendication 2, caractérisé en ce que le dispositif de sortie (7, 7') à usage collectif est une imprimante.

4. Dispositif pour transférer des données de manière sélective conforme à l'une des revendications 1, 2 ou 3, caractérisé en ce que le mécanisme de manoeuvre (11, 13, 14) comporte une matrice programmable (14), et en ce qu'au moins un ordinateur (1, 2, 2') de la pluralité d'ordinateurs comporte un dispositif pour programmer la matrice programmable pour définir différents arrangements des conducteurs, qui sont utilisés au moyen du mécanisme de manoeuvre (11, 13, 14) pour des liaisons définies des deux interfaces au moins pour ordinateurs de l'élément de raccordement (5), de façon à rendre possible un transfert de données conformément à différents protocoles de transfert de fichiers entre des ordinateurs dont les interfaces parallèles pour imprimante sont reliées aux deux interfaces au moins pour ordinateur de l'élément de raccordement (5).

5. Dispositif pour transférer des données de manière sélective conforme à la revendication 4, caractérisé en ce que la matrice programmable (14) est programmée au moyen d'un premier programme de commande qui programme et produit la liaison entre les deux interfaces au moins pour ordinateur de l'élément de raccordement (5) par utilisation d'un arrangement spécifique des conducteurs, qui est associé à un protocole spécifique de transfert de fichiers, dans lequel, après le lancement d'un programme de transfert de fichiers par mise en oeuvre du protocole de transfert de fichiers, un deuxième programme de commande rompt la liaison pour le transfert de fichiers et établit à nouveau une liaison de l'une au moins des interfaces pour ordinateur de l'élément de raccordement (5) à au moins une des interfaces du dispositif de sortie de l'élément de raccordement (5).

6. Elément de raccordement (5) pour transférer des données de manière sélective entre respectivement deux d'une pluralité d'ordinateurs (1, 2, 2'), dans lequel chaque ordinateur (1, 2, 2') présente une interface parallèle pour imprimante, ou entre un ordinateur respectif et au moins un dispositif de sortie (7, 7') qui comporte une interface pour ordinateur, dans lequel l'élément de raccordement (5) comporte au moins deux interfaces pour ordinateur et au moins une interface pour dispositif de sortie,
dans lequel les interfaces parallèles pour imprimante de la pluralité d'ordinateurs (1, 2, 2') sont reliées au moyen de câbles parallèles pour imprimante (3, 4, 4') aux interfaces pour ordinateur de l'élément de raccordement (5), et dans lequel l'interface pour ordinateur du dispositif de sortie au moins (7, 7') à usage collectif est reliée au moyen d'un câble parallèle d'imprimante (6, 6') à l'interface au moins pour dispositif de sortie (7, 7') de l'élément de raccordement (5),
dans lequel les câbles parallèles pour imprimante (3, 4, 4', 6, 6') comportent des conducteurs de commande et des conducteurs d'état pour surveiller un état du dispositif de sortie (7, 7') pendant un mode de fonctionnement normal,
caractérisé en ce que, l'élément de raccordement (5) présente mécanisme de manoeuvre (11, 13, 14; 15),
dans lequel le mécanisme de manoeuvre (11, 13, 14; 15) raccorde pendant le mode de fonctionnement normal au moins une interface pour ordinateur de l'élément de raccordement (5) à l'interface au moins pour dispositif de sortie (7, 7') de l'élément de raccordement (5), de façon à rendre possible une transmission de données entre l'ordinateur (1, 2, 2') qui est relié à l'interface pour ordinateur de l'élément de raccordement (5) et le dispositif de sortie (7, 7') qui est relié à l'interface pour dispositif de sortie de l'élément de raccordement (5), et
dans lequel le mécanisme de manoeuvre (11, 13, 14; 15) relie les deux interfaces au moins pour ordinateur de l'élément de raccordement (5) lors de la réception d'une séquence de données sur les conducteurs de commande et les conducteurs d'état, laquelle ne se produit pas pendant le mode de fonctionnement normal, ainsi que par l'utilisation d'un arrangement des conducteurs qui rend possible un transfert de données spécifique entre les deux ordinateurs au moins (1, 2, 2') qui sont reliés aux deux interfaces au moins pour ordinateur de l'élément de raccordement (5), sur les câbles parallèles pour imprimante.

7. Elément de raccordement (5) conforme à la revendication 6, caractérisé en ce que le mécanisme de manoeuvre (11, 13, 14) comporte une matrice programmable (14), et en ce qu'au moins un ordinateur (1, 2, 2') de la pluralité d'ordinateurs comporte un dispositif pour programmer la matrice programmable pour définir différents arrangements des conducteurs, qui sont utilisés au moyen du mécanisme de manoeuvre (11, 13, 14) pour des liaisons mutuelles définies des deux interfaces au moins pour ordinateurs de l'élément de raccordement (5), de façon à rendre possible un transfert de données conformément à différents protocoles de transfert de fichiers entre des ordinateurs dont les interfaces parallèles pour imprimante sont reliées aux deux interfaces au moins pour ordinateur de l'élément de raccordement (5).

8. Elément de raccordement (5) conforme à la revendication 7, caractérisé en ce que la matrice programmable (14) est programmée au moyen d'un premier programme de commande qui programme et produit la liaison entre les deux interfaces au moins pour ordinateur de l'élément de raccordement (5) par utilisation d'un arrangement spécifique des conducteurs, lequel est associé à un protocole spécifique de transfert de fichiers, dans lequel, après le lancement d'un programme de transfert de fichiers par mise en oeuvre du protocole de transfert de fichiers, un deuxième programme de commande rompt la liaison pour le transfert de fichiers et établit à nouveau une liaison de l'une au moins des interfaces pour ordinateur de l'élément de raccordement (5) à au moins une des interfaces du dispositif de sortie de l'élément de raccordement (5).
